# EUROPEAN PATENT APPLICATION

(11) **EP 4 521 562 A1**
(43) Date of publication of application: **12.03.2025**
(21) Application number: 22940784.6
(22) Date of filing: 27.12.2022
(51) Int. Cl.: H01R 13/10, H01R 13/04, H01R 13/73, H01R 13/514

(54) **PHOTOVOLTAIC CONNECTOR**

(30) Priority: 06.05.2022 CN 202221074330 U
(71) Applicant: Sungrow Power Supply Co., Ltd., Hefei, Anhui 230088 (CN)
(72) Inventor: SHEN, Zhanliang, Hefei, Anhui 230088 (CN); YU, Yanfei, Hefei, Anhui 230088 (CN); CHEN, Peng, Hefei, Anhui 230088 (CN)
(74) Representative: Zacco Norway AS
(86) International application number: PCT/CN2022/142189
(87) International publication number: WO 2023/213090

(57) **Abstract**

Disclosed in the present invention is a photovoltaic connector, comprising a socket, and plugs configured to be inserted into the socket, wherein each plug is provided with at least one photovoltaic cable configured to be electrically connected to the socket; the socket is configured to be connected to at least two plugs in an inserted manner; and/or, the number of the photovoltaic cables of at least one plug is at least two. In the photovoltaic connector, if the socket is configured to be connected to at least two plugs in an inserted manner, in comparison with the prior art in which sockets correspond to plugs on a one-to-one basis, the number of the sockets is reduced, and the area on the box that is occupied by the socket is reduced, thereby reducing the overall size of the box. If the number of the photovoltaic cables of at least one plug is at least two, in comparison with the prior art in which each plug is provided with one photovoltaic cable, the number of the plugs and an operation space to be reserved for plugging and unplugging the plug are reduced, and the area on the box that is occupied by the photovoltaic connector is reduced, thereby reducing the overall size of the box.

## Description

The present application claims the priority to Chinese Patent Application No. 202221074330.1, titled "PHOTOVOLTAIC CONNECTOR", filed with the China National Intellectual Property Administration on May 06, 2022, the entire disclosure of which is incorporated herein by reference.

### FIELD

The present application relates to the technical field of photovoltaic power generation, and in particular to a photovoltaic connector.

### BACKGROUND

In a photovoltaic system, photovoltaic cables are generally connected by a photovoltaic connector. For example, an inverter, a junction box and the like may be provided with the photovoltaic connector to connect to the photovoltaic cables.

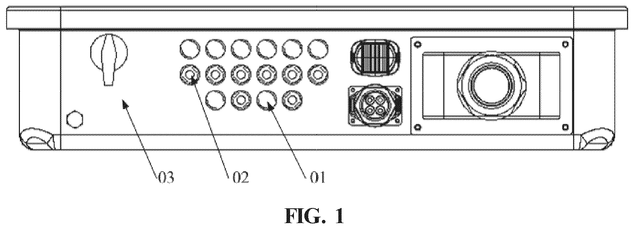

As shown in FIG. 1, the photovoltaic connector mainly includes sockets 01 and plugs 02 in one-to-one correspondence. Specifically, the sockets 01 are mounted to a case 03, and each plug 02 is configured to be in cooperation with the corresponding socket 01 by insertion.

In the above structure, each socket 01 has to be independently mounted to the case 03. Thus, a mounting space needs to be reserved between each two adjacent sockets 01. As a result, the photovoltaic connector may occupy a large area on the case 03, making the entire case 03 relatively large.

Moreover, each plug 02 is provided with a photovoltaic cable, and each plug 02 has to be plugged and unplugged separately. Therefore, an operation space for plugging and unplugging the plug 02 may also be reserved between each two adjacent sockets 01. As the operation space for plugging and unplugging the plug 02 is relatively large, the area occupied by the photovoltaic connector may be further enlarged, and the size of case 03 may be further increased.

In summary, a problem to be solved by those skilled in the art is how to design the photovoltaic connector to reduce the area on the case occupied by the photovoltaic connector and further reduce the size of the case.

### SUMMARY

In view of this, an object of the present application is to provide a photovoltaic connector, which reduces an area on a case occupied by the photovoltaic connector and further reduces the size of the case.

To achieve the above object, the following technical solutions are provided according to the present application.

A photovoltaic connector includes a socket and a plug that is configured to be connected to the socket by insertion,
the plug is provided with at least one photovoltaic cable, and the at least one photovoltaic cable is configured to be electrically connected to the socket; and
the socket is configured to be connected to at least two plugs by insertion; and/or at least one plug is provided with at least two photovoltaic cables.

Optionally, in a case that at least one plug is provided with at least two photovoltaic cables, the at least two photovoltaic cables of at least one plug are both positive photovoltaic cables, and/or the at least two photovoltaic cables are both negative photovoltaic cables, and/or, at least one of the at least two photovoltaic cables is a positive photovoltaic cable and at least another one of the at least two photovoltaic cables is a negative photovoltaic cable.

Optionally, the at least one plug includes a plug housing and a pin provided in the plug housing and the plug housing is configured to be inserted into the socket, one end of the pin is electrically connected to the photovoltaic cable in a fixed manner, and the other end of the pin is configured to be electrically connected to the socket, and the pin and the plug housing are connected in an insulated manner.

Optionally, the pin is configured to be electrically connected to a conductive member of the socket in a sheathing manner, and/or the photovoltaic cable is connected to the plug housing in a sealed manner.

Optionally, the plug includes a core fixed in the plug housing, the core is provided with a mounting hole, the pin is located in the mounting hole, and the pin is configured to cooperate with the core in a position-limited manner along an axial direction of the pin.

Optionally, the core is connected to the plug housing by snap fit.

Optionally, the plug housing and the core are both connected to the photovoltaic cable in a sealed manner through a cable seal, and the plug housing is provided with a snap hole for being connected to the cable seal by snap fit, and the cable seal is located in the mounting hole.

Optionally, one end of the mounting hole close to the snap hole is provided with an expanding hole for cooperating with the cable seal, and the expanding hole expands from one end of the expanding hole away from the snap hole to the other end of the expanding hole close to the snap hole.

Optionally, the plug housing is configured to be connected to the socket by snap fit.

Optionally, the socket is provided with a slot and a conductive member, and the plug is configured to be inserted into the slot, and the photovoltaic cable is configured to be electrically connected to the conductive member.

Optionally, the slot is in one-to-one correspondence to the plug, and/or the photovoltaic cable is in one-to-one correspondence to the conductive member.

Optionally, one end of the conductive member is located in the slot, and the other end of the conductive member extends out of the slot from a bottom end of the slot.

Optionally, the plug is configured to be connected to the socket in a sealed manner through a plug seal, and the plug seal is provided on a bottom wall or a side wall of the slot, or the plug seal is provided on an end face or a side face of the plug.

Optionally, the socket includes a base that is configured to be fixedly connected to a case in a sealed manner, and the plug is configured to be inserted into the base.

Optionally, the base is provided with a socket seal that is configured to be connected to the case in a sealed manner.

According to the photovoltaic connector provided in the present application, if the socket is configured to be connected to at least two plugs by insertion, i.e. the socket is in correspondence to at least two plugs, compared with a solution in the prior art that sockets and plugs are in one-to-one correspondence, the number of the socket is effectively decreased, thereby reducing the required mounting area for the socket, i.e. reducing the area on the case occupied by the socket, and further reducing the size of the entire case. If at least one plug is provided with at least two photovoltaic cables, compared with a solution in the prior art that each plug is provided with one photovoltaic cable, the number of the plug is effectively decreased, and the operation space reserved for plugging and unplugging the plug is effectively reduced, thereby reducing the required mounting area for the photovoltaic connector, i.e. reducing the area on the case occupied by the photovoltaic connector, and further reducing the size of the entire case.

Moreover, according to the photovoltaic connector provided in the present application, if the socket is connected to at least two plugs, the number of the socket is decreased, thereby simplifying mounting of the photovoltaic connector and improving mounting efficiency. If at least one plug is provided with at least two photovoltaic cables, the number of the plug is decreased, thereby simplifying mounting of the photovoltaic connector and improving mounting efficiency.

### BRIEF DESCRIPTION OF THE DRAWINGS

For more clearly illustrating embodiments of the present application or the technical solutions in the prior art, drawings referred to describe the embodiments or the prior art will be briefly described hereinafter. Apparently, the drawings in the following description are only some examples of the present application, and for those skilled in the art, other drawings may be obtained based on these drawings without any creative efforts.
FIG. 1 is a view showing the distribution of photovoltaic connectors on an case according to the prior art;
FIG. 2 is an exploded view of a photovoltaic connector according to an embodiment of the present application;
FIG. 3 is a front view of a socket of the photovoltaic connector according to the embodiment of the present application;
FIG. 4 is a sectional view taken along a line A-A in FIG. 3;
FIG. 5 is a bottom view of the socket of the photovoltaic connector according to the embodiment of the present application;
FIG. 6 is an exploded view of a plug of the photovoltaic connector according to the embodiment of the present application;
FIG. 7 is a front view of the plug of the photovoltaic connector according to the embodiment of the present application;
FIG. 8 is a sectional view taken along a line B-B in FIG. 7;
FIG. 9 is a top view of the plug of the photovoltaic connector according to the embodiment of the present application;
FIG. 10 is a sectional view taken along a line C-C in FIG. 9;
FIG. 11 is a schematic view showing mounting of the plug of the photovoltaic connector according to the embodiment of the present application;
FIG. 12 is a schematic view showing mounting of a plug housing and a core of the photovoltaic connector according to the embodiment of the present application;
FIG. 13 is another schematic view showing mounting of the plug of the photovoltaic connector according to the embodiment of the present application;
FIG. 14 is a front view of a photovoltaic connector according to an embodiment of the present application;
FIG. 15 is a sectional view taken along a line D-D in FIG. 14;
FIG. 16 is a sectional view taken along a line E-E in FIG. 14;
FIG. 17 is a side view of the photovoltaic connector according to the embodiment of the present application;
FIG. 18 is another sectional view of a photovoltaic connector according to an embodiment of the present application;
FIG. 19 is a schematic structural view of a photovoltaic connector according to an embodiment of the present application;
FIG. 20 is a schematic structural view of another photovoltaic connector according to an embodiment of the present application;
FIG. 21 is a schematic structural view of yet another photovoltaic connector according to an embodiment of the present application; and
FIG. 22 is a view showing the distribution of the photovoltaic connector on an case according to an embodiment of the present application.

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

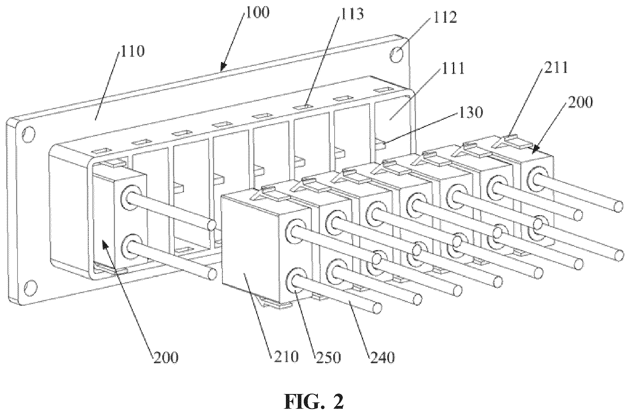

As shown in FIG. 2, a photovoltaic connector according to an embodiment of the present application includes a socket 100 and a plug 200 that is configured to be connected to the socket 100 by insertion. It may be appreciated that, the plug 200 and the socket 100 are connected by insertion to achieve an electrical connection between the plug 200 and the socket 100.

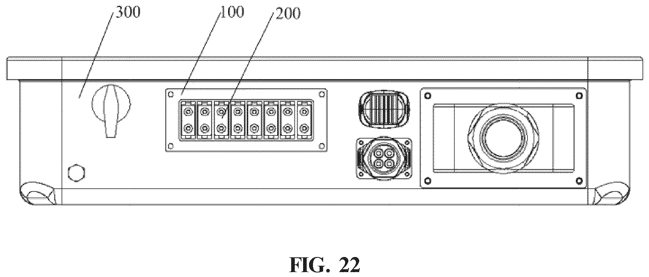

As shown in FIG. 22, the socket 100 is configured to be arranged on a case 300 of electrical equipment. To facilitate maintenance, the socket 100 is configured to be arranged on the case 300 in a detachable manner. Specifically, the socket 100 is configured to be arranged on the case 300 in a detachable manner through a fastener, and the socket 100 is provided with a fixation hole 112 for the fastener to pass through.

The plug 200 is provided with at least one photovoltaic cable 240, and the photovoltaic cable 240 is configured to be electrically connected to the socket 100.

In the above photovoltaic connector, the socket 100 is configured to be connected to at least two plugs 200 by insertion, and/or at least one plug 200 is provided with at least two photovoltaic cables 20.

If the socket 100 is configured to be connected to at least two plugs 200 by insertion, i.e. the socket 100 is in correspondence to at least two plugs 200, compared with a solution in the prior art that sockets and plugs are in one-to-one correspondence, the number of the socket 100 is effectively decreased, thereby reducing the required mounting area for the socket 100, i.e. reducing the area on the case 300 occupied by the socket 100, and further reducing the size of the entire case 300. Moreover, the number of the socket 100 is decreased, thereby simplifying mounting of the photovoltaic connector and improving mounting efficiency. Since the number of the socket 100 is decreased, the cost of the socket 100 is reduced, thereby reducing the cost of the entire photovoltaic connector.

If at least one plug 200 is provided with at least two photovoltaic cables 240, compared with a solution in the prior art that each plug is provided with one photovoltaic cable, the number of the plug 200 is effectively decreased, and the operation space reserved for plugging and unplugging the plug 200 is effectively reduced, thereby reducing the required mounting area for the photovoltaic connector, i.e. reducing the area on the case 300 occupied by the photovoltaic connector, and further reducing the size of the entire case 300. Moreover, the number of the plug 200 is decreased, thereby simplifying mounting of the photovoltaic connector and improving mounting efficiency. Since the number of the plug 200 is decreased, the cost of the plug 200 is reduced, thereby reducing the cost of the entire photovoltaic connector.

Therefore, with the photovoltaic connector according to the above embodiment, the occupied area on the case 300 is reduced, thereby reducing the size of the entire case 300. Furthermore, the mounting of the photovoltaic connector is simplified, which increases the mounting efficiency. Moreover, the cost of the entire photovoltaic connector is reduced.

In the above photovoltaic connector, if the socket 100 is configured to be connected to at least two plugs 200 by insertion, at least two of the plugs 200 may be the same, and/or at least two of the plugs 200 may be different.

It should be noted that, the expression that two plugs 200 may be the same refers to that they have the same structure and the same size. The expression that two plugs 200 may be different refers to that they may have different structures and/or different sizes. Specifically, if the two plugs 200 have different structures, they may have different photovoltaic cables 240.

It may be appreciated that, the expression that the two plugs 200 may have different photovoltaic cables 240 refers to that they may have different number of photovoltaic cables 240 or have photovoltaic cables 240 with different polarities.

To facilitate manufacturing and mounting, if the socket 100 is configured to be connected to at least two plugs 200 by insertion, at least two of the plugs 200 may have same photovoltaic cables 240 or have different photovoltaic cables 240.

In the above photovoltaic connector, for the plug 200 that has at least two photovoltaic cables 240, at least two of the photovoltaic cables 240 may have same polarities, and/or have different polarities, which may be selected according to actual needs.

Specifically, if at least one plug 200 is provided with at least two photovoltaic cables 240, the at least two photovoltaic cables 240 of at least one plug 200 may be both positive photovoltaic cables 240a, and/or the at least two photovoltaic cables 240 may be both negative photovoltaic cables 240b, and/or at least one of the photovoltaic cables 240 may be the positive photovoltaic cable 240a and at least another one of the photovoltaic cables 240 may be the negative photovoltaic cable 240b.

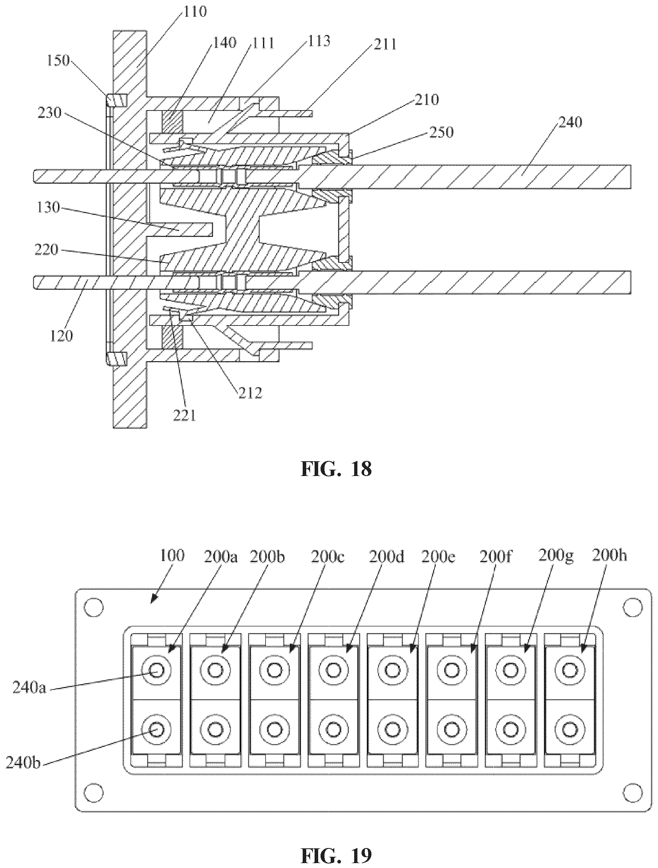

As shown in FIG. 19, the socket 100 is configured to be connected to eight plugs 200 by insertion, namely a plug A 200a, a plug B 200b, a plug C 200c, a plug D 200d, a plug E 200e, a plug F 200f, a plug G 200g, and a plug H 200h. Any two of the eight plugs 200 are the same. Each of the eight plugs 200 has two photovoltaic cables 240, which are a positive photovoltaic cable 240a and a negative photovoltaic cable 240b respectively. As shown in FIG. 22, the photovoltaic connector shown in FIG. 19 is mounted to the case 300. It can be known from comparison between FIG. 1 and FIG. 22 that, while having the same photovoltaic cables 240, the photovoltaic connector in FIG. 22 requires a relatively small mounting area, i.e. occupies a relatively small area on the case 300.

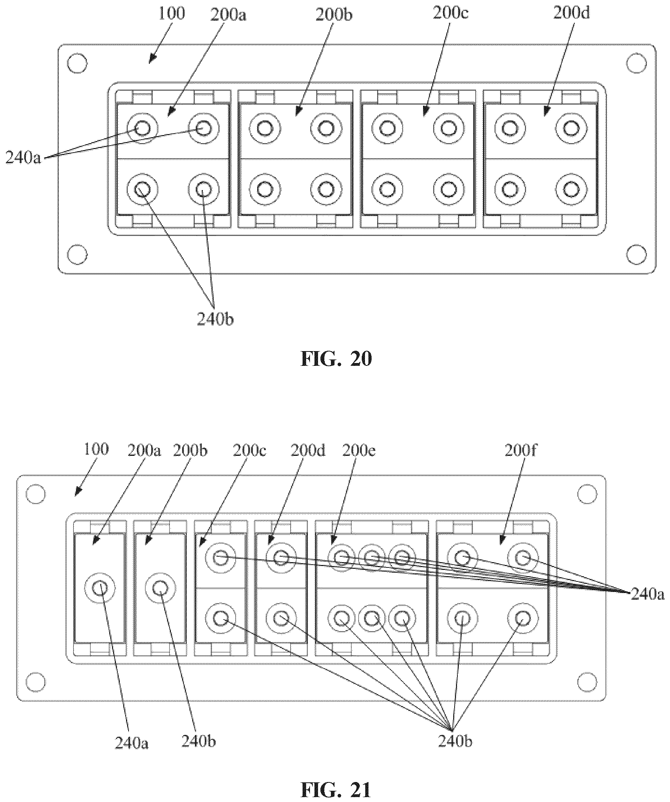

As shown in FIG. 20, the socket 100 is configured to be connected to fourth plugs 200 by insertion, namely a plug A 200a, a plug B 200b, a plug C 200c, and a plug D 200d. Any two of the four plugs 200 are the same. Each of the four plugs 200 has four photovoltaic cables 240, which are two positive photovoltaic cables 240a and two negative photovoltaic cables 240b.

As shown in FIG. 21, the socket 100 is configured to be connected to six plugs 200 by insertion, namely a plug A 200a, a plug B 200b, a plug C 200c, a plug D 200d, a plug E 200e, and a plug F 200f. The plug A 200a has one positive photovoltaic cable 240a, and the plug B 200b has one negative photovoltaic cable 240b. The plug C 200c and the plug D 200d are the same, and each has one positive photovoltaic cable 240a and one negative photovoltaic cable 240b. The plug E 200e has six photovoltaic cables 240, which are distributed into three positive photovoltaic cables 240a and three negative photovoltaic cables 240b. The plug F 200f has four photovoltaic cables 240, which are distributed into two positive photovoltaic cables 240a and two negative photovoltaic cables 240b.

In actual use, the plug 200 may be of other types and distribution, which are not limited to the three embodiments shown in FIG. 19 to FIG. 21.

In the above photovoltaic connector, the specific structures of the plug 200 and the socket 100 may be selected according to actual needs.

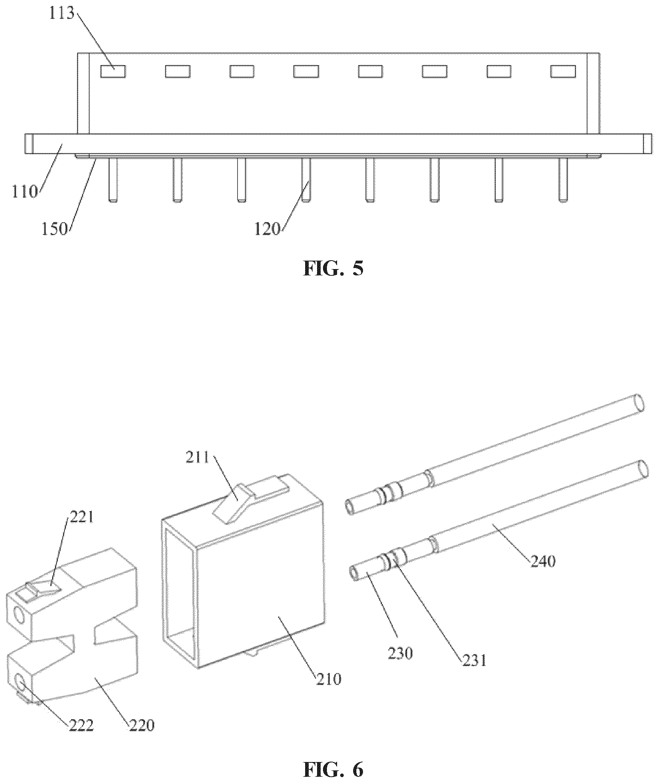

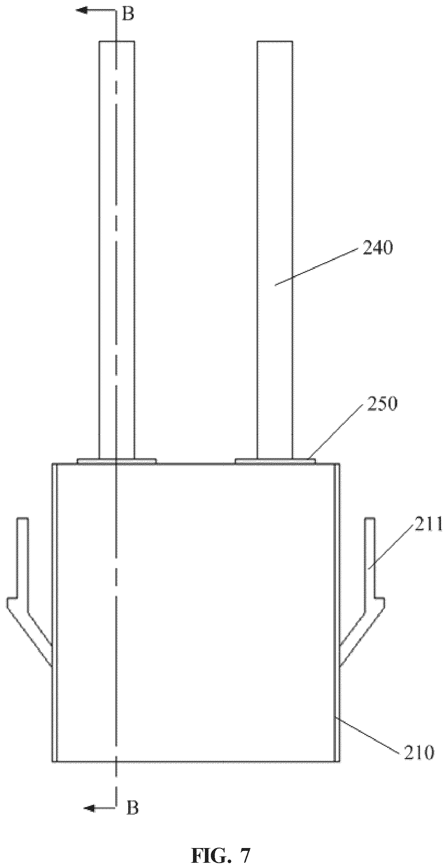

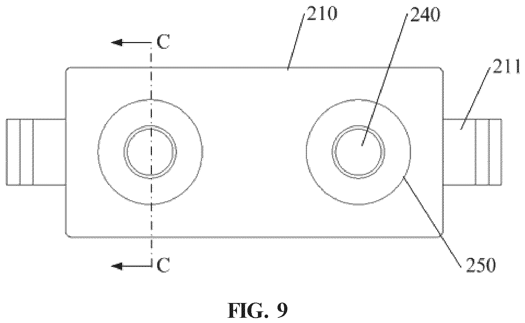

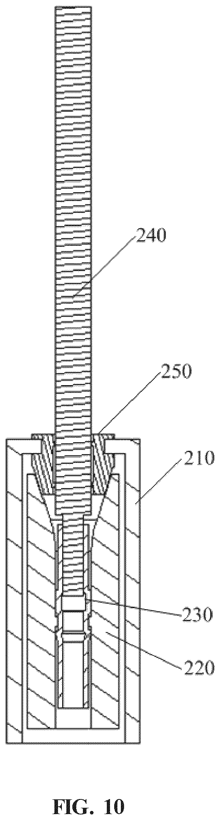

In an embodiment, as shown in FIG. 6 to FIG. 10, the above plug 200 includes a plug housing 210 and a pin 230 arranged in the plug housing 210. The plug housing 210 is configured to be inserted into the socket 100. One end of the pin 230 is electrically connected to the photovoltaic cable 240 in a fixed manner, and the other end of the pin 230 is configured to be electrically connected to the socket 100. The pin 230 and the plug housing 210 are connected in an insulated manner.

In the above structure, the pin 230 is provided for facilitating the electrical connection between the photovoltaic cable 240 and the socket 100. The plug housing 210 is provided for facilitating the insertion between the plug 200 and the socket 100.

To facilitate the connection between the photovoltaic cable 240 and the pin 230, the pin 230 is pressed onto the photovoltaic cable 240. In this way, the fixed connection and the electrical connection are realized at the same time.

In actual use, the fixed connection and the electrical connection between the photovoltaic cable 240 and the pin 230 may be realized by other means, which are not limited to the above embodiment.

In the above photovoltaic connector, to facilitate the electrical connection between the pin 230 and the socket 100, the pin 230 is configured to be electrically connected to a conductive member 120 of the socket 100 in a sheathing manner.

Specifically, the pin 230 may be configured to sheathe the conductive member 120, or the conductive member 120 may be configured to sheathe the pin 230. To increase stability, the pin 230 is configured to cooperate with the conductive member 120 in a sheathing manner to be securely connected. For example, the pin 230 may be in transition fit or in interference fit with the conductive member 120, which is not limited in the present embodiment.

To increase reliability, the photovoltaic cable 240 and the plug housing 210 are connected in a sealed manner. Methods for the sealed connection may be selected according to actual needs, which is not limited in the present embodiment.

In the above photovoltaic connector, the pin 230 and the plug housing 210 are connected in an insulated manner. The pin 230 and the plug housing 210 may be directly connected in an insulated manner. Specifically, the plug housing 210 may be an insulating member. Certainly, the pin 230 and the plug housing 210 may be indirectly connected in an insulated manner. Specifically, the pin 230 and the plug housing 210 are indirectly connected in an insulated manner through an insulating member.

To facilitate mounting of the pin 230, the above plug 200 further includes a core 220 for being fixed in the plug housing 210. The core 220 is provided with a mounting hole 222. The pin 230 is located in the mounting hole 222, and the pin 230 is configured to cooperate with the core 220 in a position-limited manner along an axial direction of the pin 230.

In the above structure, the core 220 is in connection with the plug housing 210 and the pin 230. In this structure, the core 220 may be an insulating member. In this way, the insulated connection between the pin 230 and the plug housing 210 is realized.

In the above plug 200, the pin 230 is entirely located in the mounting hole 222, or the pin 230 extends out of the mounting hole 222, which can be selected according to actual needs. To facilitate mounting, the pin 230 is entirely located in the mounting hole 222. In this case, if the pin 230 is configured to be electrically connected to the conductive member 120 in a sheathing manner, the conductive member 120 may be configured to insert into the mounting hole 222 and be sheathed in the pin 230. Specifically, the pin 230 is provided with an insertion hole 232, and the conductive member 120 is inserted into the insertion hole 232 of the pin 230.

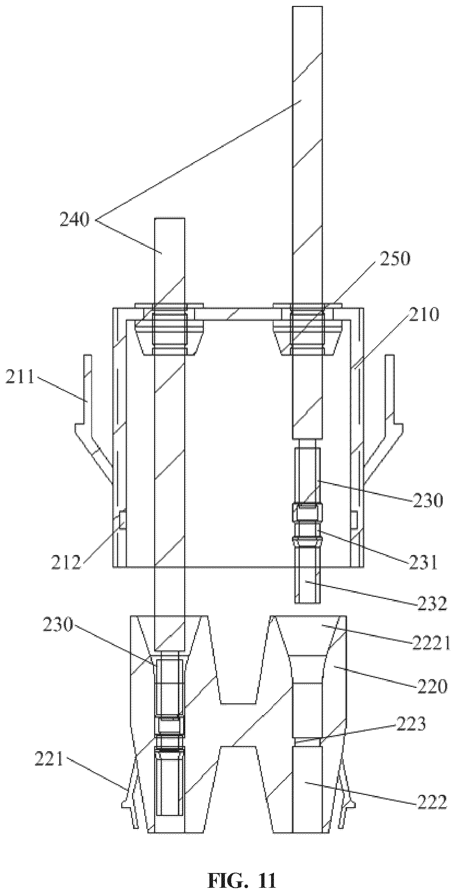

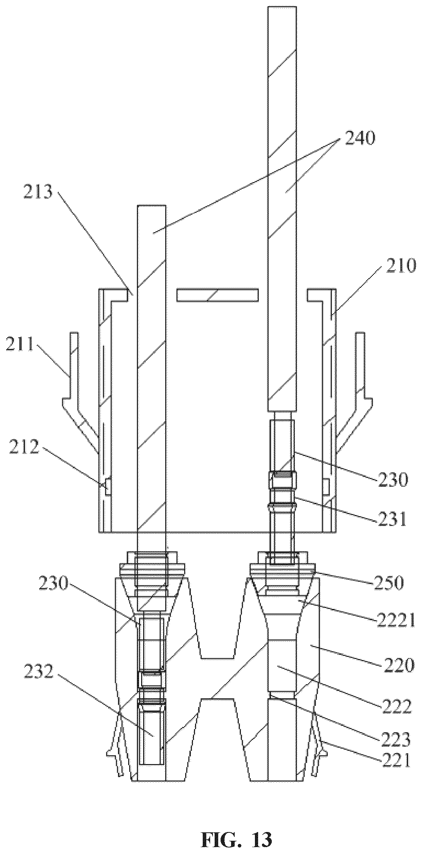

To facilitate the position limit along the axial direction, as shown in FIG. 11 and FIG. 13, one of the pin 230 and the core 220 is provided with a limiting protrusion 223, and the other one of the pin 230 and the core 220 is provided with a limiting groove 231 for cooperating with the limiting protrusion 223. To facilitate mounting and increasing stability, the limiting protrusion 223 is provided on the core 220, and the limiting groove 231 is provided on the pin 230.

The shape, number and size of the limiting protrusion 223 and the limiting groove 231 can be selected according to actual needs. To simplify the structure, the limiting protrusion 223 and the limiting groove 231 are both of an annular shape, and are each arranged along a circumferential direction of the corresponding part where they are located respectively.

To mount and dismount, the core 220 and the plug housing 210 are fixedly connected in a detachable manner. Specifically, the core 220 is connected to the plug housing 210 by snap fit. That is, the core 220 and the plug housing 210 are fixedly connected in a detachable manner by snap fit.

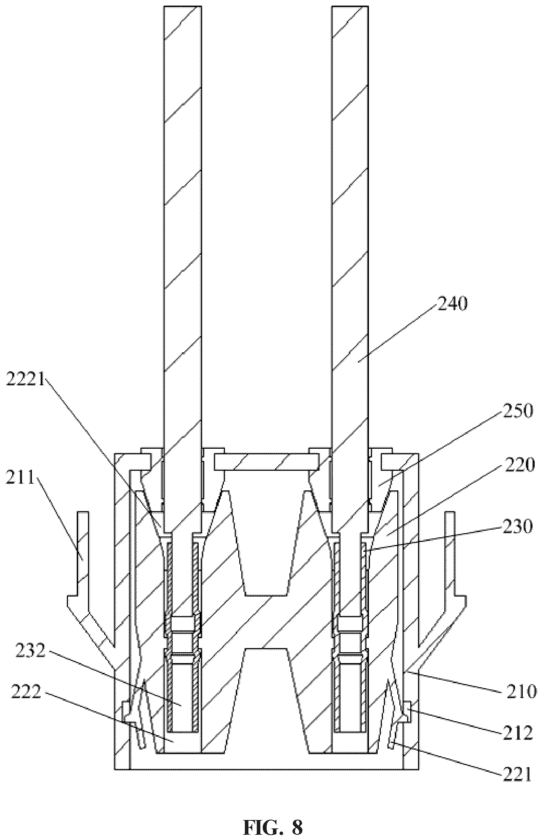

As shown in FIG. 8, and FIG. 11 to FIG. 13, one of the core 220 and the plug housing 210 is provided with a first snap 221, and the other one of the core 220 and the plug housing 210 is provided with a first groove 212 connected to the first snap 221 by snap fit. To facilitate mounting, the first snap 221 is provided on the core 220, and the first groove 212 is provided on the plug housing 210.

The structure, size and number of the first snap 221 and the first groove 212 can be selected according to actual needs. To simplify the structure and ensure the stability, two first snaps 221 and two first grooves 212 are provided, and are respectively located at two ends of the corresponding part where they are located respectively.

If the plug 200 includes the plug housing 210, the core 220 and the pin 230, to improve safety, the photovoltaic cable 240 and the plug housing 210 are connected in a sealed manner, and the photovoltaic cable 240 and the core 220 are connected in a sealed manner. In an embodiment, the plug housing 210 and the core 220 are both connected to the photovoltaic cable 240 in a sealed manner through a cable seal 250. The plug housing 210 is provided with a snap hole 213 for being connected to the cable seal 250 by snap fit, and the cable seal 250 is located in the mounting hole 222. It may be appreciated that, the cable seal 250 is located between the plug housing 210 and the core 220.

To facilitate mounting, one end of the mounting hole 222 close to the snap hole 213 is provided with an expanding hole 2221 for cooperating with the cable seal 250, and the expanding hole 2221 expands from one end of the expanding hole 2221 away from the snap hole 213 to the other end close to the snap hole 213.

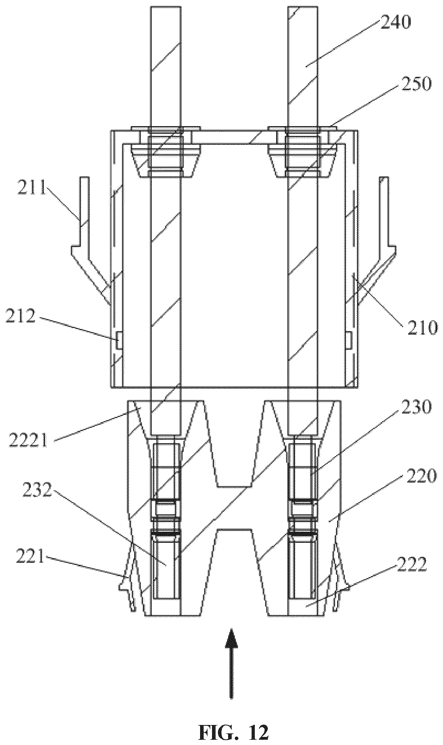

A mounting method for the plug 200 includes the following steps. As shown in FIG. 11, the cable seal 250 is mounted in the snap hole 213 of the plug housing 210. A cable assembly formed by the photovoltaic cable 240 and the pin 230 passes through the cable seal 250. The limiting groove 231 on the pin 230 is connected to the limiting protrusion 223 on the core 220 by snap fit to achieve position-limit along the axial direction. Under natural conditions, the cable assembly and the core 220 may not loosen and be separated without any external force or tools. As shown in FIG. 12, the core 220 with the cable assembly is pushed towards a side close to the cable seal 250. That is, the core 220 with the cable assembly is pushed in a direction illustrated by an arrow in FIG. 12. With a click, the first snap 221 of the core 220 is popped into the first groove 212 of the plug housing 210, and the cable seal 250 is tightly pressed, as shown in FIG. 8. In this way, a sealing between the photovoltaic cable 240 and the plug housing 210 is realized, and the pulling strength of the photovoltaic cable 240 is improved.

In actual use, the cable seal 250 may be mounted in the mounting hole 222 of the core 220 first during the mounting process. Specifically, the cable seal 250 is mounted in the expanding hole 2221, as shown in FIG. 13. For other steps, references may be made to the above descriptions, which are not described in detail herein.

In the above photovoltaic connector, to facilitate mounting and dismounting of the plug 200, the plug 200 is configured to be fixedly connected and electrically connected to the socket 100 in a detachable manner.

To facilitate the fixed connection in the detachable manner, the plug housing 210 is configured to be connected to the socket 100 by snap fit. Specifically, one of the socket 100 and the plug housing 210 is provided with a second groove 13, and the other one of the socket 100 and the plug housing 210 is provided with a second snap 211 for cooperating with the second groove 113 by snap fit. To improve appearance and facilitate operation, the second snap 211 is provided on the plug housing 210, and the second groove 113 is provided on the socket 100.

The structure, size and number of the second snap 211 and the second groove 113 can be selected according to actual needs. To simplify the structure and ensure the stability, two second snaps 211 and two second grooves 113 are provided, and are respectively located at two ends of the corresponding part where they are located respectively.

In the above photovoltaic connector, the photovoltaic cable 240 is configured to be electrically connected to the socket 100 in a detachable manner, such that the plug 200 is configured to be electrically connected to the socket 100 in a detachable manner. If the plug 200 includes a pin 230 and a core 220, then the pin 230 is configured to be electrically connected to the socket 100 in a detachable manner.

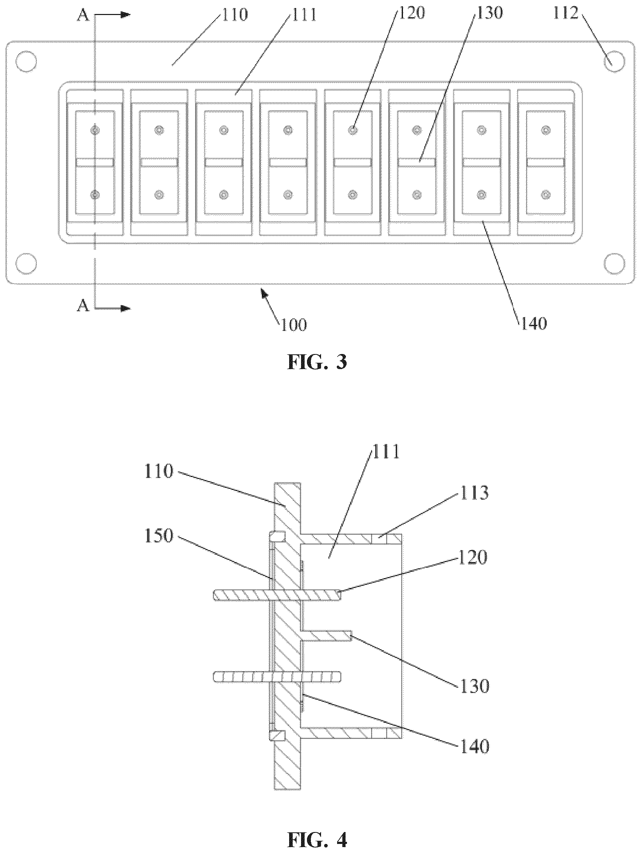

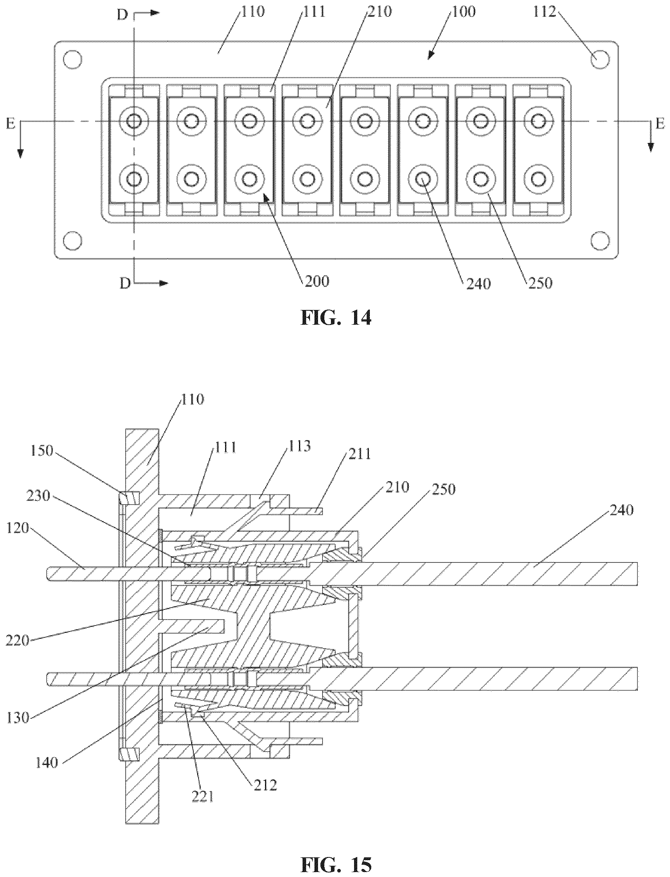

As shown in FIG. 3 and FIG. 4, the socket 100 is provided with a slot 111 and a conductive member 120. As shown in FIG. 14 and FIG. 15, the plug 200 is configured to be inserted into the slot 111, and the photovoltaic cable 240 is configured to be electrically connected to the conductive member 120.

If the plug 200 is configured to be securely connected and electrically connected to the socket 100 in a detachable manner, the plug 200 is configured to be securely connected to the slot 111 in a detachable manner, and the photovoltaic cable 240 is configured to be electrically connected to the conductive member 120 in a detachable manner.

If two or more slots 111 and two or more plugs 200 are provided and the socket 100 is configured to be connected to at least two plugs 200 by insertion, in order to partition different plugs 200, the two or more slots 111 and the two or more plugs 200 are in one-to-one correspondence. Certainly, one of the two or more slots 111 may be provided in correspondence to at least two plugs 200, which is not limited to the above embodiment.

It may be appreciated that, if the socket 100 is configured to be connected to one plug 200 by insertion, the slot 111 may also be in one-to-one correspondence to the plug 200. If at least two slots 111 are provided, the at least two slots 111 are distributed along a length direction of the socket 100 one after another. In actual use, the at least two slots 111 may be distributed along a width direction of the socket 100 one after another, which is not limited in the present embodiment.

To improve the adaptability of the socket 100 to the plug 200, the photovoltaic cable 240 and the conductive member 120 are in one-to-one correspondence. Certainly, the conductive member 120 may be in correspondence to at least two photovoltaic cables 240, which is not limited in the present embodiment.

If at least one plug 200 is provided with at least two photovoltaic cables 240, the slot 111 is in one-to-one correspondence to the plug 200, and the photovoltaic cable 240 is in one-to-one correspondence to the conductive member 120, at least two conductive members 120 are provided in at least one slot 111. To partition the conductive members 120 in the slot 111, the at least one slot 111 is provided with a partition 130, and the partition 130 partitions two adjacent conductive members 120 in the slot 111.

The number of the partition 130 can be determined according to the number of the conductive member 120, which is not limited in the present embodiment.

In the socket 100, the conductive member 120 may be entirely located in the slot 111, or may extend out of the slot 111. To facilitate a connection between the socket 100 and devices in the case 300, one end of the conductive member 120 is located in the slot 111, and the other end of the conductive member 120 extends out of the slot 111 from a bottom end of the slot 111.

To increase safety and reliability, the plug 200 is configured to be connected to the socket 100 in a sealed manner. Optionally, the plug 200 is configured to be connected to the socket 100 in a sealed manner through a plug seal 140.

In one aspect, the plug seal 140 may be arranged on a bottom wall or a side wall of the slot 111. In this case, the plug seal 140 and the plug 100 are joined together. During mounting, the plug seal 140 and the slot 111 are assembled before the plug 200 is mounted. As shown in FIG. 3, FIG. 4 and FIG. 15, the plug seal 140 is arranged on the bottom wall of the slot 111. In this case, after the plug 200 and the socket 100 are mounted, the plug seal 140 abuts against an end face of the plug 200. As shown in FIG. 18, the plug seal 140 is arranged on the side wall of the slot 111. In this case, after the plug 200 and the socket 100 are mounted, the plug seal 140 abuts against a side face of the plug 200.

In the other aspect, the plug seal 140 may be arranged on the end face or the side face of the plug 200. In this case, the plug seal 140 and the plug 200 are joined together. During mounting, the plug seal 140 and the plug 200 are assembled before the plug 200 is mounted to the socket 100. Specifically, the plug seal 140 is arranged on the end face of the plug 200. In this case, after the plug 200 and the socket 100 are mounted, the plug seal 140 abuts against the bottom wall of the slot 111. Alternatively, the plug seal 140 is arranged on the side face of the plug 200. In this case, after the plug 200 and the socket 100 are mounted, the plug seal 140 abuts against the side wall of the slot 111.

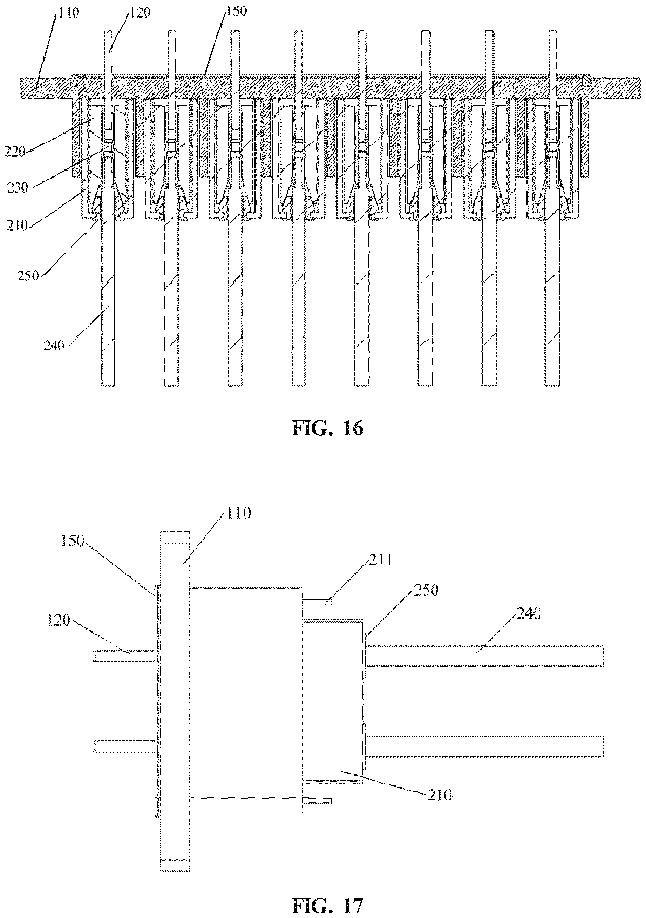

In the above photovoltaic connector, the socket 100 is configured to be mounted on the case 300. To increases safety and reliability, the socket 100 includes a base 110 configured to be fixedly connected to the case 300 in a sealed manner, and the plug 200 is configured to be inserted to the base 110. It may be appreciated that, the slot 111 and the fixation hole 112 are both provided on the base 110. If the conductive member 120 passes through the slot 111, the conductive member 120 passes through the base 110, as shown in FIG. 5, and FIG. 16 to FIG. 18.

Specifically, as shown in FIG. 4, FIG. 5, and FIG. 15 to FIG. 18, the base 110 is provided with a socket seal 150 configured to be connected to the case 300 in a sealed manner. To facilitate sealing, the socket seal 150 is arranged on a bottom face of the base 110.

In actual use, the base 110 may be connected to the case 300 in a sealed manner by other means, which is not limited in the present embodiment.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A photovoltaic connector, comprising a socket and at least one plug that is configured to be connected to the socket by insertion, wherein
the plug is provided with at least one photovoltaic cable, and the at least one photovoltaic cable is configured to be electrically connected to the socket; and
the socket is configured to be connected to at least two plugs by insertion, and/or the at least one plug is provided with at least two photovoltaic cables.

2. The photovoltaic connector according to claim 1, wherein in a case that the at least one plug is provided with at least two photovoltaic cables, the at least two photovoltaic cables of at least one plug are both positive photovoltaic cables, and/or the at least two photovoltaic cables are both negative photovoltaic cables, and/or at least one of the at least two photovoltaic cables is a positive photovoltaic cable and at least another one of the at least two photovoltaic cables is a negative photovoltaic cable.

3. The photovoltaic connector according to claim 1, wherein
the plug comprises a plug housing and a pin provided in the plug housing, and the plug housing is configured to be inserted into the socket;
one end of the pin is electrically connected to the photovoltaic cable in a fixed manner, the other end of the pin is configured to be electrically connected to the socket; and
the pin and the plug housing are connected in an insulated manner.

4. The photovoltaic connector according to claim 3, wherein the pin is configured to be electrically connected to a conductive member of the socket in a sheathing manner, and/or the photovoltaic cable is connected to the plug housing in a sealed manner.

5. The photovoltaic connector according to claim 3, wherein the plug comprises a core fixed in the plug housing, the core is provided with a mounting hole, the pin is located in the mounting hole, and the pin is configured to cooperate with the core in a position-limited manner along an axial direction of the pin.

6. The photovoltaic connector according to claim 5, wherein the core is connected to the plug housing by snap fit.

7. The photovoltaic connector according to claim 5, wherein the plug housing and the core are both connected to the photovoltaic cable in a sealed manner through a cable seal, the plug housing is provided with a snap hole for being connected to the cable seal by snap fit, and the cable seal is located in the mounting hole.

8. The photovoltaic connector according to claim 7, wherein one end of the mounting hole close to the snap hole is provided with an expanding hole cooperating with the cable seal, and the expanding hole expands from one end of the expanding hole away from the snap hole to the other end of the expanding hole close to the snap hole.

9. The photovoltaic connector according to claim 3, wherein the plug housing is configured to be connected to the socket by snap fit.

10. The photovoltaic connector according to claim 1, wherein the socket is provided with a slot and a conductive member, the plug is configured to be inserted into the slot, and the photovoltaic cable is configured to be electrically connected to the conductive member.

11. The photovoltaic connector according to claim 10, wherein the slot is in one-to-one correspondence to the plug and/or the photovoltaic cable is in one-to-one correspondence to the conductive member.

12. The photovoltaic connector according to claim 10, wherein one end of the conductive member is located in the slot, and the other end of the conductive member extends out of the slot from a bottom end of the slot.

13. The photovoltaic connector according to claim 10, wherein the plug is configured to be connected to the socket in a sealed manner through a plug seal, the plug seal is provided on a bottom wall or a side wall of the slot, or the plug seal is provided on an end face or a side face of the plug.

14. The photovoltaic connector according to any one of claims 1 to 13, wherein the socket comprises a base that is configured to be fixedly connected to a case in a sealed manner, and the plug is configured to be inserted into the base.

15. The photovoltaic connector according to claim 14, wherein the base is provided with a socket seal that is configured to be connected to the case in a sealed manner.
